# EUROPÄISCHE PATENTANMELDUNG

(11) **EP 0 707 113 A1**
(43) Veröffentlichungstag der Anmeldung: **17.04.1996**
(21) Anmeldenummer: 95115238.8
(22) Anmeldetag: 27.09.1995
(51) Int. Cl.: D21H 21/18, D21H 17/57, C08G 18/70, C08G 18/80

(54) **Verfahren zur Herstellung trockenfest und/oder nassfest ausgerüsteter cellulosehaltiger Flächengebilde**

(30) Priorität: 10.10.1994 DE 4436058
(71) Anmelder: BAYER AG, D-51368 Leverkusen (DE)
(72) Erfinder: Jansen, Bernhard, Dr., D-51061 Köln (DE); König, Joachim, Dr., D-51519 Odenthal (DE); Nowak, Peter, D-41539 Dormagen (DE); Reiners, Jürgen, Dr., D-51373 Leverkusen (DE)

(57) **Zusammenfassung**

Verfahren zur Herstellung trockenfest und/oder naßfest ausgerüsteter, gegebenenfalls holzhaltiger cellulosehaltiger Flächengebilde wie Papier, Pappe und Karton mit verbessertem Weißgrad unter Verwendung wasserdispergierbarer Isocyanate, worin die wasserdispergierbaren Isocyanate:
a) aliphatische, cycloaliphatische, araliphatische oder aromatische Isocyanate der NCO-Funktionalität von 1,8 bis 4,2 im Gemisch mit polyethermodifizierten aliphatischen, cycloaliphatischen, araliphatischen oder aromatischen Isocyanaten der mittleren NCO-Funktionalität 0,8 bis 3,2 sind,
b) die Isocyanatgemische a) einen Gehalt an 1 bis 25 Gew.-% Isocyanatgruppen enthalten,
c) einen Gehalt von in Form von Polyetherketten eines mittleren Molekulargewichts von 10 bis 3500 (Zahlenmittel) angeordeten Ethylenoxid-Einheiten von 20 bis 60 Gew.-%, bezogen auf das Isocyanatgemisch haben, sowie gegebenenfalls
d) einen Gehalt an tertiären Aminogruppen und/oder Ammoniumgruppen von 1 bis 500 Milliäquivalenten pro 100g Isocyanatgemisch a) besitzen.

## Beschreibung

Die vorliegende Erfindung betrifft ein Verfahren zur Herstellung trockenfest und/oder naßfest ausgerüsteter, gegebenenfalls holzhaltiger cellulosehaltiger Flächengebilde wie beispielsweise Papier, Pappe und Karton mit verbessertem Weißgrad unter Verwendung wasserdispergierbarer Isocyanate.

Isocyanate sind als Additive bei der Papierfabrikation seit langem bekannt.

Speziell bekannt ist aus DE-A 4 211 480 ein Verfahren zur Naßfestausrüstung von Papier mit Hilfe wasserdispergierbarer Polyisocyanatgemische, welche 2 bis 20 Gew.-% in Form von Polyetherketten angeordneter Ethylenoxideinheiten aufweisen, die Polyether-Ketten enthalten im Mittel 5 bis 70 Ethylenoxideinheiten.

Diese Ausrüstung verschlechtert den Weißgrad des Papiers nicht.

EP-A 0 582 166 beschreibt die Anwendung von Polyisocyanatgemischen, die tert. Aminogruppen und/oder Ammoniumgruppen und 0 bis 30 Gew.- % (bezogen auf das Gemisch) Ethylenoxideinheiten in Form von Polyetherketten enthalten, zur Herstellung trockenfest und naßfest ausgerüsteter und/oder geleimter cellulosehaltiger Flächengebilde. Auch hier wird der Weißgrad des hergestellten Produktes nicht beeinflußt.

Der Erfindung liegt die Erkenntnis zugrunde, daß höhere Anteile von Ethylenoxideinheiten in Form von Polyetherketten, bezogen auf das Polyisocyanatgemisch, als in EP-A 0 582 166 und DE-A 4 211 480 vorgesehen, eine zusätzliche Steigerung der Naßfestigkeit bewirken. Dies ist unerwartet, weil die Erhöhung des Polyetheranteils eine Verringerung des Isocyanatgehaltes, also der cellulosereaktiven Gruppen, zur Folge hat. Vollends überraschend ist der Anstieg des Weißgrades der behandelten Papiere, Pappen und Kartons mit steigendem Polyetheranteil. Eine Erhöhung des Weißgrades bei der Papierfabrikation ist normalerweise nur durch Bleichen des Zellstoffes oder durch Mitverwendung von optischen Aufhellern möglich.

Gegenstand der Erfindung ist ein Verfahren zur Herstellung trockenfest und/oder naßfest ausgerüsteter gegebenenfalls holzhaltiger Flächengebilde wie Papier, Pappe und Karton mit verbessertem Weißgrad unter Verwendung wasserdispergierbarer Isocyanate, das dadurch gekennzeichnet ist, daß die verwendeten wasserdispergierbaren Isocyanate:
a) aliphatische, cycloaliphatische, araliphatische oder aromatische Isocyanate der NCO-Funktionalität von 1,8 bis 4,2 im Gemisch mit polyethermodifizierten aliphatischen, cycloaliphatischen, araliphatischen oder aromatischen Isocyanten der NCO-Funktionalität 0,8 bis 3,2 sind,
b) die Isocyanatgemische a) 1 bis 25 Gew.- % Isocyanatgruppen enthalten,
c) einen Gehalt von in Form von Polyetherketten eines mittleren Molekulargewichtes von 100 bis 3 5000 (Zahlenmittel) angeordneter Ethylenoxid-Einheiten von 20 bis 60 Gew.- % (bei Anwesenheit tertiärer Amino- und/oder Ammoniumgruppen von 30 bis 60 Gew.-%), bezogen auf das Isocyanatgemisch, sowie gegebenenfalls
d) einen Gehalt an tertiären Aminogruppen und/oder Ammoniumgruppen von 1 bis 500 Milliäquivalenten pro 100 g Isocyanatgemisch a) besitzen.

Bevorzugt enthalten die Isocyanatgemische a) 1 bis 23 Gew.-% Isocyanatgruppen und besitzen einen Gehalt von in Form von Polyetherketten eines mittleren Molekulargewichtes von 100 bis 1 000, bevorzugt 100 bis 600 (Zahlenmittel) angeordneter Ethylenoxid-Einheiten von 20 bis 50 Gew.-% (bei Anwesenheit tertiärer Amino- und/oder Ammoniumgruppen von 30 bis 50 Gew.-%), bezogen auf das Isocyanatgemisch.

Die wasserdispergierbaren Polyisocyanate sind erhältlich durch Umsetzung in beliebiger Reihenfolge von:
I. einem oder mehreren nicht modifizierten Polyisocyanaten mit einer mittleren NCO-Funktionalität von 1,8 bis 4,2,
II. ein- oder mehrwertigen, im Mittel 5,0 bis 70 Ethylenoxydeinheiten aufweisenden, gegebenenfalls Estergruppen enthaltenden Polyalkylenoxidpolyetheralkohlen, und gegebenenfalls
III.
   A) Aminen, die eine gegenüber Isocyanaten reaktive Gruppe enthalten, der Formel A1) 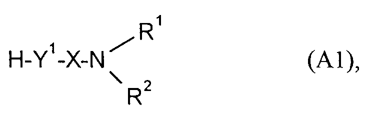 in der
      - Y¹: für O, NH oder NR³ steht, (R³= Methyl oder Ethyl),
      - R¹ und R²: a) unabhängig voneinander für C₁-C₄-Alkyl oder C₃-C₆-Cycloalkyl stehen, oder
      b) für einen Rest der Formel 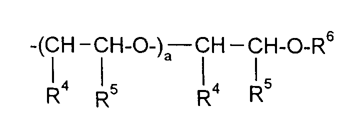 stehen,
         worin
         R⁴ und R⁵ unabhängig voneinander Wasserstoff oder Methyl bedeuten, aber immer einer der Reste Wasserstoff ist,
         R⁶ Methyl oder Ethyl bedeutet und
         a eine Zahl von 0 bis 10 ist oder
      c) für einen durch eine oder mehrere tertiäre Aminogruppen und/oder Ammoniumgruppen substituierten C₂-C₄-Alkylrest der Formeln 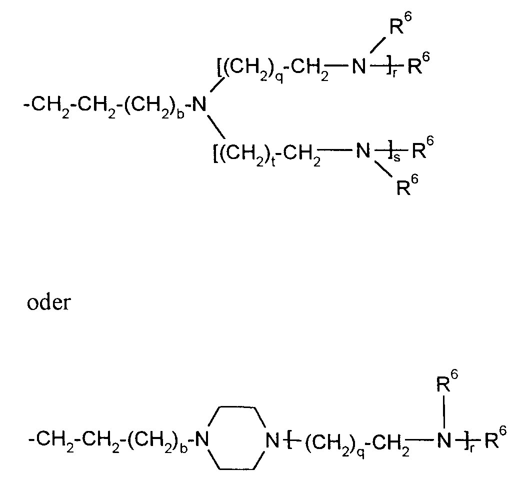 wobei
         b eine Zahl von 0 bis 2 ist,
         q und t unabhängig voneinander 1 oder 2 bedeuten und
         r und s unabhängig voneinander eine Zahl von 0 bis 3 bedeuten und
         R⁶ die obengenannte Bedeutung hat,
         oder
      d) gemeinsam mit dem N-Atom, an das sie gebunden sind, einen 5- oder 6-gliedrigen Ring der Formel 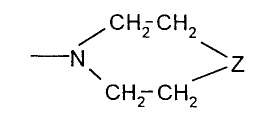 bilden, wobei
         Z für 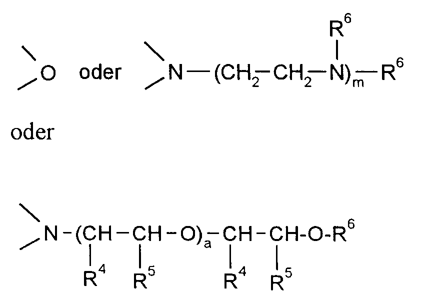
         steht, wobei
         m eine Zahl von 0 bis 2 ist und
         a, R⁴ , R⁶ die obengenannte Bedeutung haben,
         X für C₂- bis C₁₀-Alkylen, C₅ bis C₁₀-Cycloalkylen, einen Rest der Formel 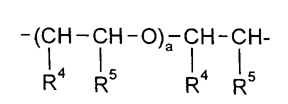 wobei R⁴, R⁵ und a obengenannte Bedeutung haben, oder einen Rest der Formel 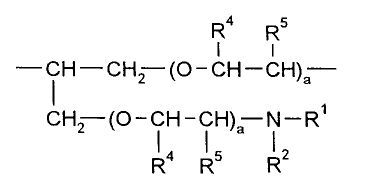 in der
         a, R⁴, R⁵, R¹ und R² die obengenannte Bedeutung haben, oder
      A 2) der Formel 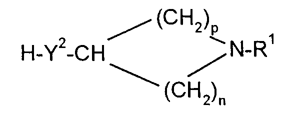 worin
      - Y²: für -O-, -NH- oder NR³ steht, wobei R³ die obengenannte Bedeutung hat, n und p unabhängig voneinander die Werte von 1 oder 2 annehmen und R¹ die obengenannte Bedeutung hat
      oder
      A 3) der Formel 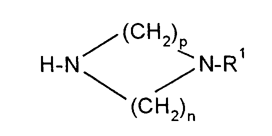 wobei n, p und R¹ die obengenannte Bedeutung haben
      oder
      A4) der Formel 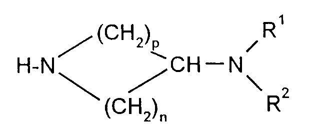 worin n, p, R¹ und R² die obengenannte Bedeutung haben,
      oder
   B) Aminen, die mehr als eine gegenüber Isocyanaten reaktive Gruppe und gegenfalls Ether- und/oder Ester- und/oder Amidgruppen enthalten und ein Molgewicht unter 10000 g/mol aufweisen
      oder
   C) den durch Umsetzung von A) oder B)durch Protonierung und/oder Quaternierung erhaltenen Ammoniumgruppen enthaltenden, gegenüber Isocyanaten reaktiven Verbindungen
oder
beliebige Gemischen aus A) bis C).

Die Amine III sind in EP-A 582 166 noch näher beschrieben.

Der Begriff "wasserdispergierbar" im vorliegenden Zusammenhang bedeutet, daß die Gemische in einer Konzentration von bis zu 70 Gew.-%, vorzugsweise bis zu 50 Gew.-% in Wasser feinteilige Dispersionen mit Partikelgrößen (Ultrazentrifuge) vom <500 nm ergeben.

Als Ausgangsstoffe für die wasserdispergierbaren Isocyanate kommen beispielsweise in Frage:
I. Nicht modifizierte, aliphatische, cycloaliphatische, araliphatische oder aromatische Isocyanate der NCO-Funktionalität von 1,8 bis 4,2. Bevorzugt werden aliphatische sowie cycloaliphatische Polyisocyanate, welche Uretdion- und/oder Isocyanurat und/oder Allophanat- und/oder Biuret- und/oder Oxadiazinstrukturen aufweisen und die in an sich bekannter Weise aus aliphatischen, cycloaliphatischen, araliphatischen oder aromatischen Diisocyanaten hergestellt werden können. Geeignet sind zum Beispiel: 1,4-Diisocyanatobutan, 1,6-Diisocyanatohexan, 1,5-Diisocyanato-2,2-dimethylpentan, 2,2,4- bzw. 2,4,4-Trimethyl-1,6-diisocyanatohexan, 1,3- und 1,4-Diisocyanatocylohexan, 1-Isocyanato-3,3,5-trimethyl-5-isocyantomethylcyclohexan, 1-Isocyanato-1-methyl-4-isocyanatomethyl-cyclohexan und 4,4-Diisocyanatodicyclohexyl-methan, oder beliebige Gemische solcher Diisocyanate.
   Bei den bevorzugten Uretdion-, Isocyanurat- Allophanat-, Oxadiazingruppen aufweisenden Reaktionsprodukten dieser Diisocyanate handelt es sich um im wesentlichen aus trimerem 1,6-Diisocyanatohexan oder 1-Isocyanato-3,3,5-trimethyl-5-isocyanatomethyl-cyclohexan und den entsprechenden höheren Homologen bestehenden, Isocyanuratgruppen und gegebenenfalls Uretdiongruppen aufweisenden Polyisocyanatgemischen mit einem NCO-Gehalt von 19 bis 24 Gew.-%. Besonders bevorzugt werden die entsprechenden, weitgehend Uretdiongruppen-freien, Isocyanuratgruppen aufweisenden Polyisocyanate des genannten NCO-Gehaltes eingesetzt, wie sie durch an sich bekannte, katalytische Trimerisierung unter Isocyanurat-Bildung von 1,6-Diisocyanatohexan oder 1-Isocyanato-3,3,5-trimethyl-5-isocyanatomethyl-cyclohexan erhalten werden und die vorzugsweise eine (mittlere) NCO-Funktionalität von 3,2 bis 4,2 aufweisen. Bevorzugt sind auch die durch Reaktion von 1,6-Diisocyanatohexan mit einem Unterschuß an Wasser in bekannter Weise erhaltenen, im wesentlichen Biuretgruppen aufweisenden trimeren Polyisocyanate mit einem NCO-Gehalt von 19 bis 24 Gew.- %.
   Weitere geeignete Polyisocyanate sind aliphatische oder aromatische Diisocyanate wie Hexamethylendiisocyanat, Toluylendiisocyanat, 1,5-Diisocyanatonaphthalin, Diphenylmethandiisoscyanat und deren höhere Homologe mit Uretdion-, Isocyanurat-, Allophanat- sowie Biuretgruppen.
II. Die Polyalkylenoxidetheralkohole sind ein- oder mehrwertige, im statistischen Mittel 5 bis 70, vorzugsweise 6 bis 60 Ethylenoxideinheiten pro Molekül enthaltende Polyalkylenoxidpolyetheralkohole, wie sie in an sich bekannter Weise durch Alkoxylierung geeigneter Startermoleküle zugänglich sind. Zur Herstellung dieser Polyalkylenoxidpolyetheralkohole können beliebige ein- oder mehrwertige Alkohole des Molekulargewichtsbereichs 32 bis 150 g/mol als Startermoleküle eingesetzt werden. Bevorzugt werden monofunktionelle aliphatische Alkohole mit 1 bis 4 Kohlenstoffatomen. Besonders bevorzugt ist Methanol oder Ethylenglykolmonomethylether. Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.
   Bei den Polyalkylenoxidpolyetheralkoholen II handelt es sich entweder um reine Polyethylenoxidpolyether oder um gemischte Polyalkylenoxidpolyether, die mindestens eine Polyethersequenz aufweisen, die mindestens 5, im allgemeinen 5 bis 70, vorzugsweise 6 bis 60 und besonders bevorzugt 7 bis 20 Ethylenoxideinheiten besitzen, und deren Alkylenoxideinheiten zu mindestens 60 Mol-%, vorzugsweise zu mindestens 70 Mol-%, aus Ethylenoxideinheiten bestehen. Bevorzugte derartige Polyalkylenoxidpolyetheralkohole sind monofunktionelle, auf einem aliphatischen, 1 bis 4 Kohlenstoffatome aufweisenden Alkohol gestartete Polyalkylenoxidpolyether, die im statistischen Mittel 6 bis 60 Ethylenoxideinheiten enthalten. Besonders bevorzugte Polyalkylenoxidpolyetheralkohole sind reine Polyethylenglykolmonomethyletheralkohole, die im statistischen Mittel 7 bis 20 Ethylenoxideinheiten aufweisen. Geeignete estergruppenhaltige Polyalkylenoxidpolyether sind OH-terminierte Polyesterether, die durch Umsetzung von aliphatischen C₂- bis C₈-Dicarbonsäuren oder deren Estern oder Säurechloriden mit Polyethern aus der Gruppe der Polyethylenoxide, Polypropylenoxide oder deren Gemischen oder Mischpolyethern daraus, wobei pro OH-Äquivalent des Polyethers 0,8 bis 0,99 Äquivalente an Carboxyl-Gruppen oder deren Derivaten eingesetzt werden, erhältlich sind und ein mittleres Molgewicht unter 10000 g/mol, vorzugsweise unter 3000 g/mol aufweisen und Hydroxylendgruppen besitzen.
III. Für die Amine III.A) seien folgende beispielhaft genannt: N,N 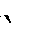 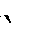 -Dimethylethylendiamin, N,N 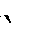 -Dimethylpropylendiamin, Dimethylaminohydroxyethan, Dimethylaminohydroxypropan, Diethylaminohydroxyethan, Dibutylaminohydroxyethan, Diethylaminoethoxyhydroxyethan, (2-Diethylaminoethoxy)-ethoxyhydroxyethan, N,N'-Triethyl-N 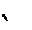 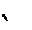 -[ω-hydroxy-tetraethoxyethyl]propylendiamin, N-Hydroxyethyl-morpholin, N-Hydroxyethylmethylpiperazin, N-Hydroxyethylpiperidin, N-Hydroxyethylpyrrolidin, 4-Hydroxy-N-methylpiperidin, 4-Hydroxy-1-dimethylaminocyclohexan, 1,3-Bis(dimethylamino-ethoxy)-2-hydroxypropan, 1,3-Bis(dimethylamino-propoxy)-2-hydroxypropan sowie die Amine der folgenden Formeln:
(C₂H₅)₂-B-(CH₂)₂-NH₂, 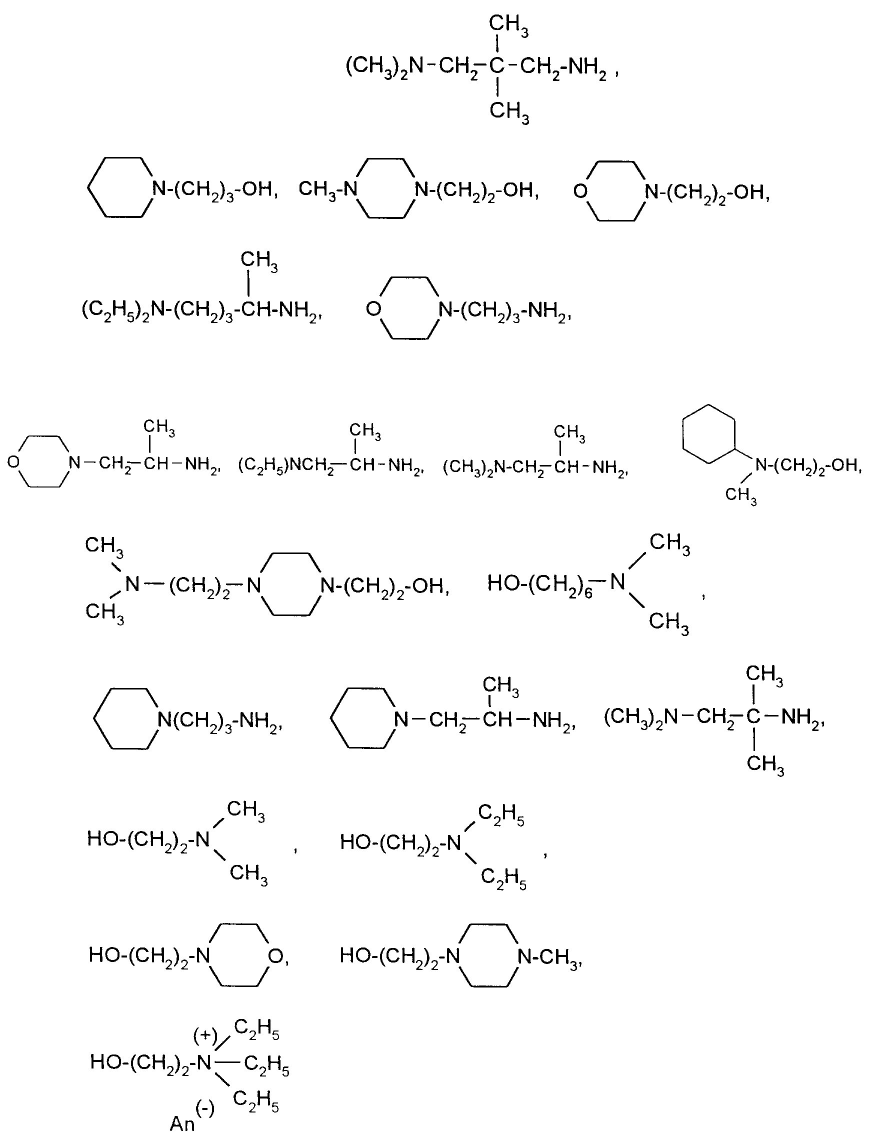
mit An⁽⁻⁾ = CH₃OSO₃⁽⁻⁾, Cl⁽⁻⁾, Br⁽⁻⁾, 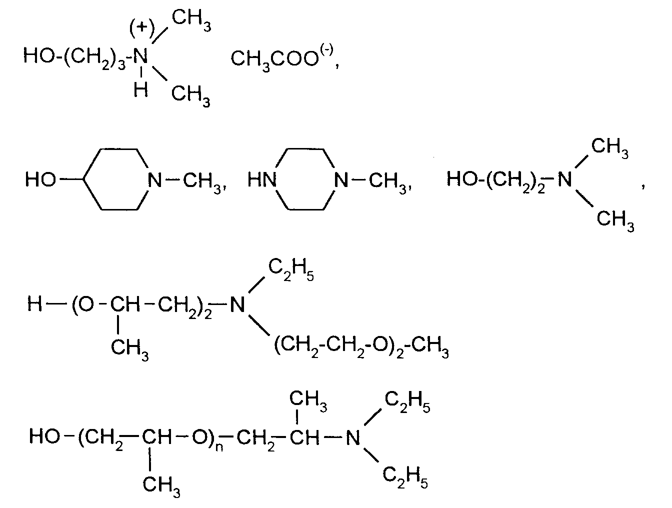
mit n = 1 bis 10, 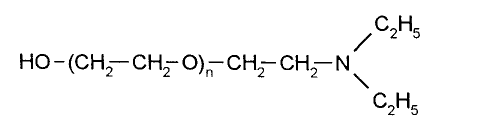
mit n = 1 bis 10, 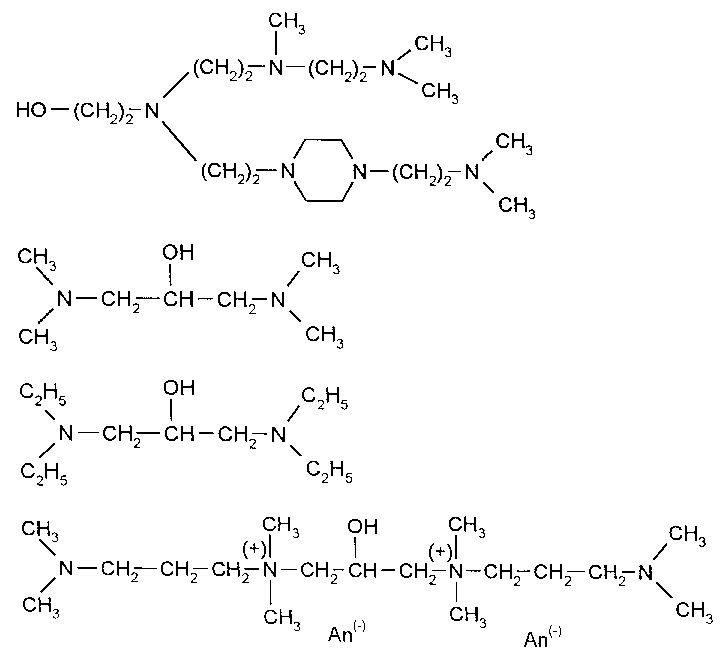
mit An⁽⁻⁾ = Cl⁽⁻⁾, Br⁽⁻⁾, CH₃OSO₃⁽⁻⁾ 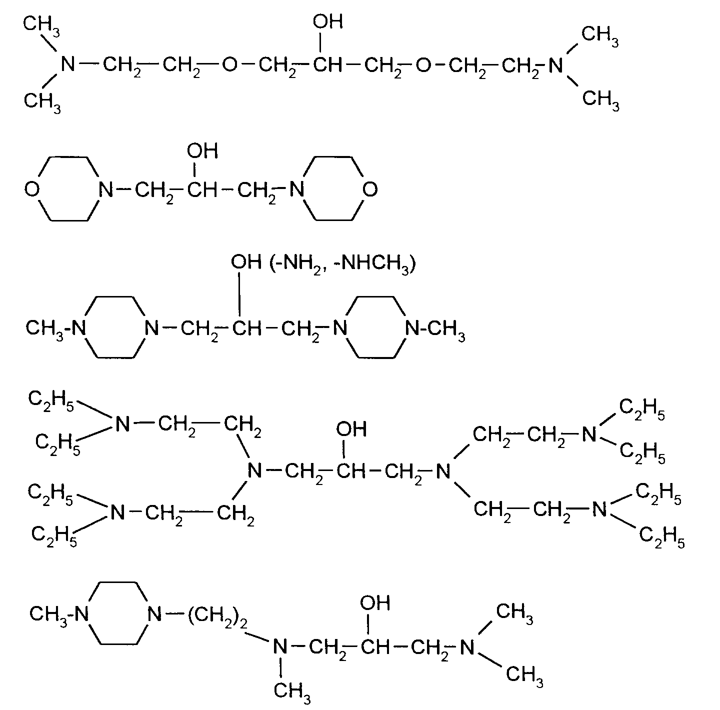
Als Amine III.B), die mehr als eine gegenüber Isocyanaten reaktive Gruppe und gegebenenfalls Ether-, und/oder Ester- und/oder Amidgruppen enthalten und ein Molgewicht unter 10000 g/mol aufweisen, seien beispielsweise genannt: Methyl-bis(2-hydroxyethyl)-amin, Methyl-bis(2-hydroxypropyl)amin, N,N'-bis (2-hydroxyethyl)-N,N 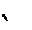 -dimethylethylendiamin, N,N''-Bis(2-hydroxyethoxyethyl)-N,N',N''-trimethyl-diethylentriamin, N,N-Dimethylaminopropyl-bis-[ω-hydroxytetraethoxyethyl]amin, Triethanolamin, Umsetzungsprodukte von Triethanolamin mit 3 bis 20 mol Ethylenoxid und/oder Propylenoxid pro mol Amin, Umsetzungsprodukte von Polyaminen wie Aminoethylpiperazin, Triethylentetramin, Bis-(2-aminoethyl)piperazin mit Ethylenoxid und/oder Propylenoxid, Diethylentriaminbispropionamid, N,N'-bis-propionylaminoethyl-N''-(2-hydroxyethyl)amin, Umsetzungsprodukte aus Tetramethylethylendiamin-Dichlorethan-Kondensaten mit Ethylenoxid und/oder Propylenoxid. Geeignete Amine III.B) sind zum Beispiel auch die folgenden Polykondensate:
a) Hydroxyterminierte Polyester, hergestellt durch Kondensation von C₂- bis C₈-Dicarbonsäuren, Polyethylenoxid und/oder Polypropylenoxid oder Mischpolyethern aus Ethylen- und Propylenoxid, und Dihydroxyalkylaminen, vorzugsweise N-Methyl-diisopropanolamin, mit einer OH-Funktionalität von 2,
b) hydroxyterminierte Polyester, hergestellt durch Kondensation von C₂- bis C₈-Dicarbonsäuren und den unter a) aufgeführten Dihydroxyalkylaminen, mit einer OH-Funktionalität von 2,
c) hydroxyterminierte oder aminoterminierte Polyesteramide aus C₂- bis C₈-Dicarbonsäuren, C₂- bis C₆-Diaminoalkanen, vorzugsweise Ethylendiamin, und den unter a) aufgeführten Dihydroxyalkylaminen, mit einer OH-Funktionalität von 2,
d) hydroxyterminierte Polyester aus C₂- bis C₈-Dicarbonsäuren, Trishydroxyalkanen, vorzugsweise Trimethylolpropan und deren Umsetzungsprodukten mit 1 bis 10 mol Ethylen- oder Propylenoxid, und den unter a) aufgeführten Dihydroxyalkylaminen, mit einer Funktionalität von über 2,
e) hydroxyfunktionelle Polyamine, die durch Umsetzung von Ammoniak oder linearen oder verzweigten (Poly)alkylenpolyaminen, wie z.B. Ethylendiamin, Diethylentriamin, Triethylentetramin, Bis(3-aminopropyl)-methylamin, α,ω-Polyetherdiaminen mit primären oder sekundären Aminogruppen oder deren Kondensaten mit einem Unterschuß an Dihalogenalkanen wie Dichlorethan, mit Alkylenoxiden erhältlich sind, vorzugsweise Triethanolamin, Tris(2-hydroxypropyl)amin,Tetrakis(2-hydroxypropyl)-ethylendiamin,
f) hydroxyfunktionelle Polyamidamine, die durch Umsetzung von linearen oder verzweigten Polykondensaten aus C₂- bis C₈-Dicarbonsäuren, Diaminen und Polyaminen, die mindestens drei acylierbare Aminogruppen enthalten, wie Diethylenamin oder Triethylentetramin, und/oder Polyaminen mit mindestens zwei acylierbaren Aminogruppen und weiteren tertiären Aminogruppen, wie Bis-(3-aminopropyl)-methylamin, und gegebenenfalls Caprolactam oder gegebenenfalls Polyetherdiolen oder Polyetherdiaminen, mit Alkylenoxiden erhältlich sind, wobei pro primäre und sekundäre Aminogruppe im Polykondensat 1-3 mol an Alkylenoxid eingesetzt wird.
g) hydroxyfunktionelle Polyamidamine gemäß f), die an Stelle der Umsetzung mit Alkylenoxiden Hydroxyethyl-Endgruppen enthalten und durch Cokondensation mit Ethanolamin erhältlich sind,
h) Aminoalkohole der Formel 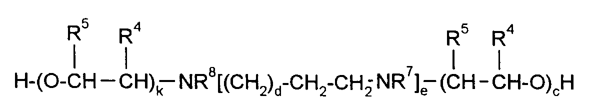 worin
   - R⁴ und R⁵: für Wasserstoff oder Methyl stehen, mit der Bedingung, daß immer ein Rest für Wasserstoff steht,
   - R⁸ und R⁷: unabhängig voneinander für Methyl, Ethyl oder einen Rest der Formel

   -(CHR⁵-CHR⁴-O)_{f}-H oder -[CH₂-(CH₂)_{g}-NR¹)ₕR² stehen,

   wobei
   R¹ und R² die oben angegebene Bedeutung haben, und
   g Werte von 1 bis 6 annimmt,
   h für 0 bis 4 steht,
   R⁴ und R⁵ die oben angegebene Bedeutung haben,
   k, c und f Werte von 0 bis 20 annehmen,
   e Werte von 0 bis 3 annimmt und
   d Werte von 0 oder 1 annimmt.

Die Amine III) B) besitzen im allgemeinen bevorzugt ein mittleres Molgewicht unter 10000 g/mol. Besonders bevorzugt sind solche mit einem mittleren Molgewicht unter 5000 g/mol, insbesondere unter 3000 g/mol.

Bei dem unter III.C) erwähnten, durch Protonierung und/oder Quaternierung Ammoniumgruppen enthaltenden gegenüber Isocyanaten reaktiven Verbindungen seien beispielsweise erwähnt:
die durch Umsetzung von Säuren oder Alkylierungsmitteln mit den Komponenten III.A) oder III.B) erhältlichen Verbindungen, deren tertiäre Aminogruppen ganz oder zum Teil in Ammoniumgruppen umwandelt wurden.

Für diese Umsetzung geeignete Säuren sind vorzugsweise Essigsäure, Ameisensäure und HCl, als Alkylierungsmittel kommen bespielsweise C₁-C₄-Alkylchloride und -bromide sowie Dialkylsulfate wie Dimethylsulfat oder Diethylsulfat in Frage.

Die wasserdispergierbaren Polyisocyanate können durch Umsetzung der folgenden Restmonomeren in beliebiger Reihenfolge hergestellt werden:
I. nicht modifizierte Polyisocyanate
II. ein- oder mehrwertige Polyalkylenoxidpolyetheralkohole
III. Amine.

Wenn die Amine III.A) bis III.C) Polyetherketten enthalten, kann auch eine Umsetzung von III A) und/oder III B) und/oder C) mit den Polyisocyanaten I. direkt zu wasserdispergierbaren Polyisocyanten führen, so daß der Anteil an Komponente II. gegebenfalls reduziert werden kann. Die erfindungsgemäß einzusetzenden nicht modifizierten Polyisocyanate I. können auch in Kombination mit externen ionischen oder nichtionischen Emulgatoren eingesetzt werden. Solche Emulgatoren sind beispielsweise in Methoden der organischen Chemie, Houben-Weyl, Bd. XIV/1, Teil 1, Seite 190-208 Thieme-Verlag, Stuttgart (1961), in der US-PS 3 428 592 und in EP-A 0 013 112 beschrieben. Die Emulgatoren werden in einer die Dispergierbarkeit gewährleistenden Menge eingesetzt. Falls zunächst Polyisocyanate I mit Polyalkylenoxidpolyetheralkoholen II. umgesetzt werden, so kann diese Umsetzung in an sich bekannter Weise, unter Einhaltung eines NCO/OH-Äquivalentverhältnisses von mindestens 2:1, im allgemeinen von 4:1 bis ca. 1000:1 erfolgen, wobei Polyether-modifizierte Polyisocyanate mit einer mittleren NCO-Funktionalität von 1,8 bis 4,2, vorzugsweise von 2,0 bis 4,0, einem Gehalt an aliphatisch oder cycloaliphatisch gebundenen Isocyanatgruppen von 12,0 bis 21,5 Gew.-% und einem Gehalt an innerhalb von Polyetherketten angeordneten Ethylenoxideinheiten (berechnet als C₂H₄O, Molekulargewicht = 44 g/mol) von 2 bis 20 Gew.-%, wobei die Polyetherketten im statischen Mittel 5 bis 70 Ethylenoxideinheiten aufweisen, erhalten werden.

Zur Durchführung des Verfahrens sind auch die entsprechenden, durch Protonierung und/oder Quaternierung der erfindungsgemäß einzusetzenden nicht modifizierten Polyisocyanatgemische I. erhältlichen, Ammoniumgruppen aufweisenden wasserdispergierbaren Polyisocyanatgemische geeignet. Zur Quaternierung können Alkylierungsmittel wie z.B. Dimethylsulfat, Diethylsulfat oder C₁-C₄-Alkylhalogenide und -sulfonate, verwendet werden.

Die Ausgangskomponenten können in beliebiger Reihenfolge unter Ausschluß von Feuchtigkeit vorzugsweise ohne Lösungsmittel umgesetzt werden. Mit steigender Menge an Alkohol-Komponente wird eine höhere Viskosität des Endproduktes erreicht, so daß in bestimmten Fällen (wenn die Viskosität z.B. über 100 Pas ansteigt) ein Lösungsmittel zugesetzt werden kann, das vorzugsweise mit Wasser mischbar ist, aber gegenüber dem Polyisocyanat inert ist. Geeignete Lösungsmittel sind:
Alkyletheracetate, Glykoldiester, Toluol, Carbonsäureester, Aceton, Methylethylketon, Tetrahydrofuran und Dimethylformamid.

Durch die Mitverwendung an sich bekannter Katalysatoren wie Dibutylzinndilaurat, Zinn-(II)-octoat oder 1,4-Diazabicyclo[2,2,2]octan in Mengen von 10 bis 1000 ppm bezogen auf die Reaktionskomponenten kann die Reaktion beschleunigt werden. Die Reaktion wird im Temperaturbereich bis 130°C, vorzugsweise im Bereich zwischen 10°C und 100°C, besonders bevorzugt zwischen 20°C und 80°C, durchgeführt. Die Reaktion wird durch Titration des NCO-Gehaltes oder durch Messung der IR-Spektren und Auswertung der NCO-Bande bei 2260-2275 cm⁻¹ verfolgt und ist beendet, wenn der Isocyanatgehalt nicht mehr als 0,1 Gew.-% oberhalb des Wertes liegt, der bei vorgegebener Stöchiometrie bei vollständigen Umsatz erreicht wird. In der Regel sind Reaktionszeiten von weniger als 24 Stunden ausreichend. Bevorzugt ist die lösungsmittelfreie Synthese der erfindungsgemäß einzusetzenden Polyisocyanate.

In einer weiteren Ausführungsform ist es auch möglich, die erfindungsmäß einzusetzenden Polyisocyanatgemische durch Mischen von
1) nicht modifizierten Polyisocyanaten I)
2) Polyisocyanaten, die durch Umsetzung von Polyisocyanaten I) mit den unter III. genannten Aminen, wobei das Äquivalentverhältnis der gegenüber Isocyanaten reaktiven Gruppen von III) zu den eingesetzten NCO-Gruppen der Komponente II) 1:1 bis 1:1000 beträgt, erhalten werden, und
3) Polyisocyanaten, die durch Umsetzung von Polyisocyanaten I. mit Polyalkylenoxidpolyetheralkoholen II, wobei das Äquivalentverhältnis der gegenüber Isocyanaten reaktiven Gruppen der Komponete II. zu den eingesetzten NCO-Gruppen der Komponente I) 1:1 bis 1.1000 beträgt, erhalten werden, herzustellen. Dabei sind die Anzahl der Aminäquivalente, der Polyethergehalt, der NCO-Gehalt und die NCO-Funktionalität durch entsprechende Einwaagen vom Fachmann so einzustellen, daß das erhaltene Gemisch die für die Wasserdispergierbarkeit erforderliche Zusammensetzung hat, wobei die bereits genannten Vorzugsbereiche gelten.

Die wasserdispergierbaren Polyisocyanatgemische sind technisch gut handhabbar und viele Monate unter Ausschluß von Feuchtigkeit lagerstabil.

Erfindungsgemäß werden die wasserdispergierbaren Polyisocyanatgemische vorzugsweise ohne organische Lösungsmittel eingesetzt. Sie sind - gegebenenfalls unter Zusatz von Säuren - und/oder bei Temperaturen bis 100°C in Wasser sehr leicht zu emulgieren. Der Wirkstoffgehalt der Emulsion kann bis 70 Gew.-% betragen. Es ist aber vorteilhafter, Emulsionen mit einem Wirkstoffgehalt von 1 bis 50 Gew.-% herzustellen, die dann vor der Dosierstelle gegebenenfalls weiter verdünnt werden können. Zur Emulgierung eigenen sich die in der Technik üblichen Mischaggregate (Rührer, Mischer mit Rotor-Stator-Prinzip und z.B. Hochdruckemulgiermaschinen).

Die bevorzugten Polyisocyanate sind selbstemulgierend, d.h. sie lassen sich nach Zugabe zur Wasserphase auch ohne Einwirkung hoher Scherkäfte leicht emulgieren. In der Regel reicht ein statischer Mischer aus. Die erhaltenen Emulsionen besitzen eine Verarbeitungszeit von bis zu 24 Stunden, die von der Struktur der erfindungsgemäß einzusetzenden Polyisocyanate, insbesondere von deren Gehalt an basischen N-Atomen abhängt.

Die Verarbeitungszeit ist der Zeitraum, in dem das Optimum der Trocken- und Naßfestwirkung erreicht wird.

Zur Erleichterung der Einarbeitung in die wäßrige Phase kann es zweckmäßig sein, das wasserdispergierbare Polyisocyanatgemisch in einem gegenüber Isocyanatgruppen inerten Lösungsmittel gelöst einzusetzen. Geeignete Lösungsmittel sind beispielsweise Essigsäureethylester, Ethylenglykoldiacetat, Propylenglykol-Diacetat, 2-Butanon, 1-Methoxypropyl-2-acetat, Toluol oder deren Gemische. Der Anteil der Lösungsmittels in der Lösung des Polyisocyanats sollte höchstens 80 Gew.-%, vorzugsweise höchstens 50 Gew.-% sein. Besonders bevorzugt ist die Verwendung lösungsmittelfreier, wasserdispergierbarer Polyisocyanate.

Die für das erfindungsgemäße Verfahren geeigneten cellulosehaltigen Materialien sind z.B. Papier oder papierähnliche Materialien wie Pappe oder Karton. Die für die Naßfest- und Trockenfestausrüstung bevorzugten Polyisocyanatgemische besitzen eine NCO-Funktionalität größer 2.

Erfindungsgemäß können die wasserdispergierbaren Polyisocyanate in der Masse eingesetzt werden, sie werden dann der cellulosehaltigen Dispersion der Faserrohstoffe direkt zugesetzt. Dazu emulgiert man das Polyisocyanatgemisch bei einer Temperatur von 20°C bis 80°C in Wasser und gibt die erhaltene Emulsion zu einer Suspension des Faserrohstoffs oder dispergiert direkt in der Suspension der Faserstoffe; aus der gebildeten Suspension wird durch Entwässerung das Papier gebildet, das anschließend getrocknet wird. Zur Emulgierung des Polyisocyanatgemischs ist es zweckmäßig, die 1- bis 4fache Menge Wasser vorzugeben. Auch höhere Wassermengen sind möglich. Beim Einsatz in der Oberfläche wird ein fertiges Rohpapier mit einer Emulsion des Polyisocyanatgemischs in Wasser, behandelt und anschließend getrocknet. Der Einsatz in der Leimpresse ist möglich. Dabei wird das in Wasser emulgierte Polyisocyanatgemisch auf die fertige Papierbahn übertragen. Der Trocken- und Naßfesteffekt wird sofort nach der Trocknung erzielt. Der durch Oberflächenbehandlung erzielbare Naßfesteffekt übersteigt den mit den bisher bekannten Naßfestmitteln bei gleicher Dosierung an Wirksubstanz erreichbaren wesentlich.

Es ist besonders bevorzugt, die wäßrige Emulsion der Polyisocyanate innerhalb von 60 Minuten, vorzugsweise innerhalb von 15 Minuten zum Faserstoff zu dosieren. Um den optimalen Naßfesteffekt unter Praxisbedinungen zu erzielen, ist eine Dosierung des Polyisocyanats z.B. kurz vor dem Stoffauflauf der Papiermaschine besonders empfehlenswert. Zur Prüfung wird man im allgemeinen im Labor Papierblätter mit einem Flächengewicht von 50 bis 100 g/m² bilden.

In Wasser hydrolysieren die NCO-Gruppen der erfindungsgemäß einzusetzenden Polyisocyanatgemische langsam unter CO₂-Entwicklung zu den entsprechenden Aminen, die mit noch vorhandenen NCO-Gruppen teilweise zu Harnstoff-Gruppen reagieren. Vorteilhafterweise treten jedoch keine Ausfällungen auf. Gemäß dem erfindungsgemäßen Verfahren könnnen die Produkte im pH-Bereich zwischen 4 und 10, vorzugsweise zwischen 5,5 und 9, in der Masse zum Feststoff dosiert werden. Besonders bevorzugt ist die Anwendung im neutralen pH-Bereich (pH 6 bis 7,5). In diesem pH-Bereich liegt ein Teil der tertiären Aminogruppen in protonierter Form vor.

Es ist auch möglich, die Dispergierung unter Zusatz von Säure durchzuführen. Eine vom pH-Wert unabhängige kationische Ladung wird erhalten, wenn durch Quaternierung der tertiären Aminogruppen erhaltenen Polyisocyanate eingesetzt werden. Eine Quaternierung ist aber für die meisten Anwendungen nicht erforderlich.

Die Mengen an wasserdispergierbarem Polyisocyanat richten sich nach dem angestrebten Effekt. In der Regel sind Mengen von 0,001 bis 50 Gew.-%, vorzugsweise 0,1 bis 10 Gew.-%, besonders bevorzugt 0,1 bis 2,0 Gew.-%, Wirkstoff, bezogen auf trockenen Faserrohstoff ausreichend. Die Dosierung an Wirksubstanz, bezogen auf Faserrohstoff, entspricht der von bekannten Naßfestmitteln des Polyamidamin-Epichlorhydrin-Typs. Die Polyisocyanate ergeben gebrauchsfertige Papiere mit guter Naßfestigkeit sofort ab Maschine. Durch Lagerung des fertigen Papiers und/oder eine Nachkondensation kann eine Verstärkung der Naßfestwirkung erreicht werden. Generell ist aber bereits ab Maschine ein höheres Naßfestniveau erreichbar als bei konventionellen Naßfestmitteln. Auch die Trockenfestigkeit ist gegenüber konventionellen Naßfestmitteln verbessert.

Das erfindungsgemäße Verfahren wird bei den üblichen Temperaturen durchgeführt. Die Verarbeitungsdauer ist von der Temperatur abhängig. Bei Temperaturen von 20 bis 25°C ist die Verarbeitungsdauer relativ lang. Die Naßfestwirkung erreicht nach 6-stündiger Lagerung der wäßrigen Emulsion noch ca. 70 % des Wertes bei sofortiger Anwendung der Emulsion. Bei höherer Temperatur, z.B. bei 50°C, ist eine Verarbeitung innerhalb von 6 Stunden zu empfehlen. Die maximale Naßfestwirkung ist dagegen überraschenderweise kaum von der Kontaktzeit mit der Celluose abhängig. Papiere, die sofort und nach einer Kontaktzeit von 2 Stunden nach Zusatz des wasserdispergierbaren Polyisocyanates zum Papierfaserstoff gebildet wurden, zeigen jeweils das gleiche Naßfestniveau. Durch geeignete Wahl der Ausgangskomponenten kann die Festigkeit des Papiers in der gewünschten Weise eingestellt werden. Das erfindungsgemäße Verfahren eignet sich nicht nur zur Herstellung von trockenfesten und wasserfesten Papieren, sondern auch zur Herstellung von öl- und benzinbeständigen Papieren.

Die wasserdispergierbaren Polyisocyanate sind in Kombination mit anderen kationischen Hilfsmitteln, wie Retentionsmitteln, Fixierhilfsmitteln, Trockenhilfsmittel und Naßfestmitteln, einsetzbar. Insbesondere durch Zusatz von handelsüblichen Retentionsmitteln von Typ der kationischen Polykondensate und Polymerisate, z.B. der Polyamide, der Polyethylenimine, der Polyamidamine und der Polyacrylamide sowie der Dual-Systeme, bestehend aus kationischen oder kationischen und anionischen und gegebenfalls partikulären Komponenten wie Kieselsolen etc. kann die Fixierung von Füllstoffen noch verstärkt werden. Dies ist besondere dann von Interesse, wenn an eine Anwendung im Laminatpapier-Bereich gedacht ist. Bevorzugte Retentionsmittel sind kationische Polykondensate aus Polyaminen, vorzugsweise N-Methyl-bis(3-amino-propyl)-amin, und Alkylendihalogeniden, vorzugsweise Dichlorethan. Es sei jedoch hervorgehoben, daß der gewünschte Naßfesteffekt auch ohne Zusatz von besonderen Fixiermitteln zu erzielen ist. Die Festigkeit des Papiers kann insbesondere durch Kombination mit Polysacchariden wie Hydroxyethylcellulose, Carboxymethylcellulose, Stärke, Galactomannanen oder deren kationischen Derivaten erhöht werden.

Selbstverständlich können die Polyisocyanatgemische gegebenenfalls mit den obengenannten kationischen Hilfsmitteln gemeinsam, d.h. gleichzeitig oder nacheinander, eingesetzt werden. Da viele der Hilfsmittel jedoch organisch gebundenes Halogen enthalten, ist eine Kombination mit AOX-freien und/oder AOX-armen Hilfsmitteln besonders bevorzugt, da die chlorfreie Papierherstellung vorrangiges Ziel ist.

Die Polyisocyanate sind nicht nur mit dem üblichen optischen Aufhellern gut verträglich, sondern bewirken mit diesen zusammen noch eine zusätzliche Steigerung des Weißgrades.

Außerdem läßt sich für die Anwendung im Hygiene-Papierbereich ein weicher Griff des Papiers erzeugen.

In den folgenden Beispielen sind die Prozentangaben Gewichtsprozente, sofern nichts anderes angegeben ist.

### Beispiele

### 1. Herstellung der wasserdispergierbaren Isocyanate

### wasserdispergierbares Isocyanat 1

80 g eines durch Trimerisierung ein Teils der Isocyanatgruppen von 1,6-Diisocyanatohexan hergestellten, Isocyanatgruppen aufweisenden Polyisocyanates, das im wesentlichen aus Tris-(6-isocyanat-hexyl)-isocyanurat und dessen höheren Homologen besteht, und einen NCO-Gehalt von 20,5 %, einen Gehalt an monomerem 1,6-Diisocyanatohexan von weniger als 0,3 % und eine Viskosität von 1000 mPas (25°C) aufweist, werden mit 20g eines auf 2-(2-Methoxyethoxy)-ethanol gestarteten Polyethers auf Basis von Ethylenoxid mit einem Zahlenmittel des Molgewichtes von 350g/mol und einer Hydroxylzahl von 160 mg KOH/g durch Rühren bei 60°C umgesetzt.

| | |
|---|---|
| NCO-Gehalt: | 15,6% |
| Viskosität (25°C): | 1470 mPas |

### wasserdispergierbares Isocyanat 2

Wie oben (wasserdispergierbares Isocyanat 1) beschrieben, werden unter Verwendung der gleichen Ausgangsverbindungen umgesetzt:
78 g Isocyanat
22 g Polyether

| | |
|---|---|
| NCO-Gehalt: | 15% |
| Viskosität (25°C): | 850 mPas |

### wasserdispergierbares Isocyanat 3

Wie oben beschrieben, werden unter Verwendung der gleichen Ausgangsverbindungen umgesetzt:
76 g Isocyanat
24 g Polyether

| | |
|---|---|
| NCO-Gehalt: | 14,7% |
| Viskosität (25°C): | 835 mPas |

### wasserdispergierbares Isocyanat 4

Wie oben beschrieben, werden unter Verwendung der gleichen Ausgangsverbindungen umgesetzt:
73 g Isocyanat
27 g Polyether

| | |
|---|---|
| NCO-Gehalt: | 12,9% |
| Viskosität (25°C): | 1490 mPas |

### wasserdispergierbares Isocyanat 5

Wie oben beschrieben, werden unter Verwendung der gleichen Ausgangsverbindungen umgesetzt:
70 g Isocyanat
30 g Polyether

| | |
|---|---|
| NCO-Gehalt: | 12,2% |
| Viskosität (25°C): | 1470 mPas |

### wasserdispergierbares Isocyanat 6

Wie oben beschrieben, werden unter Verwendung der gleichen Ausgangsverbindungen umgesetzt:
67 g Isocyanat
33 g Polyether

| | |
|---|---|
| NCO-Gehalt: | 11,2% |
| Viskosität (25°C): | 1470 mPas |

### wasserdispergierbares Isocyanat 7

Wie oben beschrieben, weden unter Verwendung der gleichen Ausgangsverbindungen umgesetzt:
64 g Isocyanat
36 g Polyether

| | |
|---|---|
| NCO-Gehalt: | 10,3% |
| Viskosität (25°C): | 1490 mPas |

### wasserdispergierbares Isocyanat 8

Wie oben beschrieben, werden unter Verwendung der gleichen Ausgangsverbindungen umgesetzt:
61 g Isocyanat
39 g Polyether

| | |
|---|---|
| NCO-Gehalt: | 9,4% |
| Viskosität (25°C): | 1420 mPas |

### wasserdispergierbares Isocyanat 9 (Vergleich)

Wie oben beschrieben, werden unter Verwendung der gleichen Ausgangsverbindungen umgesetzt:
85 g Isocyanat
15 g Polyether

| | |
|---|---|
| NCO-Gehalt: | 17,3% |
| Viskosität (25°C): | 1425 mPas |

### wasserdispergierbares Isocyanat 10 (Vergleich)

Wie oben beschrieben, werden unter Verwendung der gleichen Ausgangsverbindungen umgesetzt:
82 g Isocyanat
18 g Polyether

| | |
|---|---|
| NCO-Gehalt: | 16,5% |
| Viskosität (25°C): | 1000 mPas |

Sämtliche Reaktionsprodukte sind wasserklare, ölig aussehende Flüssigkeiten, welche sich in Wasser leicht (im Becherglas durch Umrühren mittels eines Spatels) dispergieren lassen.

### Anwendungsbeispiele (Holzschliff) 1 bis 10

Holzschliff wird bei einer Stoffdichte von 2,5 % im Holländer auf einen Mahlgrad von 38° SR gemahlen. Sodann werden jeweils 100 g der erhaltenden Holzschliffsupension in Bechergläsern mit Wasser auf 1000 ml Volumen verdünnt. 0,5 Gew.-% und 1,0 Gew.-% der hergestellten wasserdispergierbaren Isocyanate, bezogen auf Feststoff, werden nach vorheriger Dispergierung in Wasser (Dispersion mit 20 Gew.-% Polyisocyanat) zu den Holzschliff-Dispersionen gegeben und diese Dispersionen nach Zugabe noch 3 Minuten gerührt. Danach werden mit den Inhalten der Bechergläser auf einem Blattbildner (Rapid-Köthen-Gerät) Papierblätter mit einem Flächengewicht von ca. 80 g/m² gebildet. Die Papierblätter werden bei 85°C 8 Minuten im Vakuum bei 20mm Hg getrocknet und im Trockenschrank noch 10 Minuten bei 110°C nacherhitzt. Aus jedem Papierblatt werden nach erfolgter Klimatisierung 5 Prüfstreifen von 1,5 cm Breite ausgeschnitten und 5 Minuten in destilliertes Wasser eingetaucht. Sodann werden die nassen Streifen auf einer Zugmaschine sofort auf ihre Naßbruchlast geprüft.
Die Prüfergebnisse sind in der folgenden Übersichts- Tabelle zusammengefaßt.

### Naßbruchlasten bei Einsatz in der Masse, nach Kondensation bei 110°C

| Anwendungsbeispiel Nr. | wasserdispergierbares Isocyanat Nr. | NCO % | Polyethergehalt % | Naßbruchlast bei 0,5 / 1,0 % Einsatz | | Bemerkungen |
|---|---|---|---|---|---|---|
| 1 | 9 | 17,3 | 15 | 4,7 | 5,7 | Vergleichsbeispiel |
| 2 | 10 | 16,5 | 18 | 6,3 | 7,2 | Vergleichsbeispiel |
| 3 | 1 | 15,6 | 20 | 4,3 | 7 | erfindungsgemäßes Beispiel |
| 4 | 2 | 15,0 | 22 | 6,6 | 7,9 | erfindungsgemäßes Beispiel |
| 5 | 3 | 14,3 | 24 | 6,9 | 8,7 | erfindungsgemäßes Beispiel |
| 6 | 4 | 12,9 | 27 | 7,2 | 8 | erfindungsgemäßes Beispiel |
| 7 | 5 | 12,2 | 30 | 7,5 | 9 | erfindungsgemäßes Beispiel |
| 8 | 6 | 11,2 | 33 | 7,3 | 7,9 | erfindungsgemäßes Beispiel |
| 9 | 7 | 10,3 | 36 | 6,3 | 7,3 | erfindungsgemäßes Beispiel |
| 10 | 8 | 9,4 | 39 | 5,9 | 7,4 | erfindungsgemäßes Beispiel |

### Anwendungsbeispiele Oberflächenbehandlung von holzfreiem Papier 11-21

Papier, bestehend aus Eukalyptus- und Kiefernsulfatzellstoff, mit einem Flächengewicht von 70 g/m², wird in einer Labor-Leimpresse der Fa. Mathis, Zürich, Schweiz, Typ HF mit einer Leimflotte aus wasserdispergierbaren Isocyanaten behandelt.

Als Leimflotten wurden 0,5- bzw. 1%-ige wäßrige Dispersionen der wasserdispergierbaren Isocyanaten 1 bis 10 eingesetzt. In einem weiteren Arbeitsgang wurde der Leimflotte zusätzlich zu dem einen Prozent wasserdispergierbaren Isocyanates noch 0,75% eines optischen Aufhellers zugesetzt.

Die Naßaufnahme des Papiers betrug 80%. Die Papiere wurden bei 85°C für 8 Minuten getrocknet sowie 10 min bei 110°C nacherhitzt. Die Messung der Naßbruchlast erfolgte wie in den Beispielen 1 bis 10.

Zusätzlich wurde der CIE-Weißgrad ermittelt. Die Ergebnisse sind der folgendenen Übersichtstabelle zu entnehmen.

### Naßbruchlasten und Weißgrad bei Oberflächeneinsatz

| Anwendungsbeispiel Nr. | wasserdispergierbares Isocyanat Nr. | Naßbruchlast bei Polyisocyanatanteil in der Leimflotte | | | Weißgrad bei Anwesenheit von 0,75 % opt. Aufheller |
|---|---|---|---|---|---|
| | | 0,5 % Polyisocyanat | 1 % Polyisocyanat | 1 % Polyisocyanat + 0,75 % opt. Aufheller * | |
| 11 ** | 9 | 8,5 | 11,1 | 13,3 | 137,7 |
| 12 ** | 10 | 8,9 | 10,4 | 10,8 | 138,8 |
| 13 | 1 | 9,9 | 10,9 | 8,9 | 138,6 |
| 14 | 2 | 11,1 | 12,5 | 12,8 | 138,9 |
| 15 | 3 | 10,0 | 12,8 | 12,3 | 138,0 |
| 16 | 4 | 10,3 | 12,7 | 11,5 | 139,2 |
| 17 | 5 | 10,7 | 11,5 | 11,8 | 139,5 |
| 18 | 6 | 9,8 | 10,8 | 9,8 | 139,7 |
| 19 | 7 | 8,8 | 10,8 | 10,6 | 139,8 |
| 20 | 8 | 8,2 | 10,5 | 10,3 | 138,7 |

| | | | | | |
|---|---|---|---|---|---|
| *optischer Aufheller: Blankophor P flüssig 01, Handelsprodukt der Bayer AG | | | | | |
| ** Vergleichsbeispiele | | | | | |

## Patentansprüche

1. Verfahren zur Herstellung trockenfest und/oder naßfest ausgerüsteter, gegebenenfalls holzhaltiger cellulosehaltiger Flächengebilde wie Papier, Pappe und Karton mit verbessertem Weißgrad unter Verwendung wasserdispergierbarer Isocyanate, dadurch gekennzeichnet, daß die verwendeten wasserdispergierbaren Isocyanate:
a) aliphatische, cycloaliphatische, araliphatische oder aromatische Isocyanate der NCO-Funktionalität von 1,8 bis 4,2 im Gemisch mit polyethermodifizierten aliphatischen, cycloaliphatischen, araliphatischen oder aromatischen Isocyanaten der mittleren NCO-Funktionalität 0,8 bis 3,2 sind,
b) die Isocyanatgemische a) 1 bis 25 Gew.-% Isocyanatgruppen enthalten,
c) einen Gehalt von in Form von Polyetherketten eines mittleren Molekulargewichts von 10 bis 3500 (Zahlenmittel) angeordneten Ethylenoxid-Einheiten von 20 bis 60 Gew.-%, (bei Anwesenheit tertiärer Amino- und/oder Ammoniumgruppen von 30 bis 60 Gew.-%), bezogen auf das Isocyanatgemisch haben, sowie gegebenenfalls
d) einen Gehalt an tertiären Aminogruppen und/oder Ammoniumgruppen von 1 bis 500 Milliäquivalenten pro 100 g Isocyanatgemisch a) besitzen.

2. Verfahren gemäß Anspruch 1, dadurch gekennzeichnet, daß die Isocyanatgemische a) 1 bis 23 Gew.-% Isocyanatgruppen enthalten, c) einen Gehalt von in Form von Polyetherketten eines mittleren Molekulargewichtes von 100 bis 1000 (Zahlenmittel) angeordneten Ethylenoxid-Einheiten von 20 bis 50 Gew.-%, bezogen auf das Isocyanatgemisch, haben.

3. Verfahren gemäß den Ansprüchen 1 und 2, dadurch gekennzeichnet, daß wasserdispergierbare Polyisocyanate verwendet werden, die durch Umsetzung in beliebiger Reihenfolge von:
I. einem oder mehreren nicht modifizierten Polyisocyanaten mit einer mittleren NCO-Funktionalität von 1,8 bis 4,2
II. ein- oder mehrwertigen, im Mittel 5,0 bis 70 Ethylenoxideinheiten aufweisenden, gegebenenfalls Estergruppen enthaltenden Polyalkylenoxidpolyetheralkoholen, und gegebenenfalls
III.
A) Aminen, die eine gegenüber Isocyanaten reaktive Gruppe enthalten, der Formel A1) 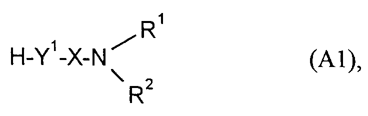 in der
Y¹ für O, NH oder NR³ steht, (R³= Methyl oder Ethyl),
R¹ und R²
a) unabhängig voneinander für C₁-C₄-alkyl oder C₃-C₆-Cycloalkyl stehen, oder
b) für einen Rest der Formel 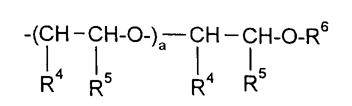 stehen,
worin
R⁴ und R⁵ unabhängig voneinander Wasserstoff oder Methyl bedeuten aber immer einer der Reste Wasserstoff ist,
R⁶ Methyl oder Ethyl bedeutet und
a eine Zahl von 0 bis 10 ist oder
c) für einen durch eine oder mehrere tertiäre Aminogruppen und/oder Ammoniumgruppen substituierten C₂-C₄-Alkylrest der Formeln 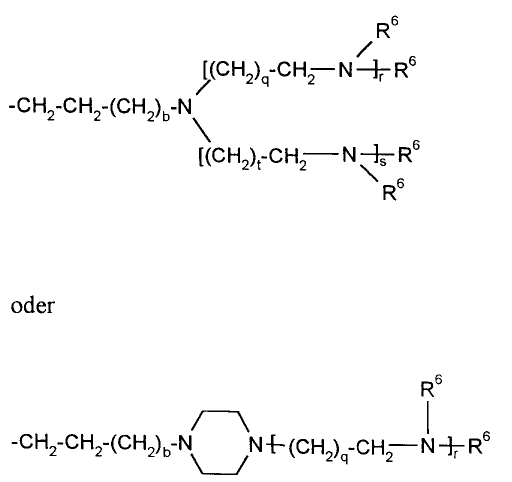 wobei
b eine Zahl von 0 bis 2 ist,
q und t unabhängig voneinander 1 oder 2 bedeuten und
r und s unabhängig voneinander eine Zahl von 0 bis 3 bedeuten und
R⁶ die obengenannte Bedeutung hat,
oder
d) gemeinsam mit dem N-Atom, an das sie gebunden sind, ein 5- oder 6-gliedrigen Ring der Formel 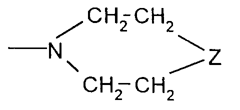 bilden, wobei
Z für 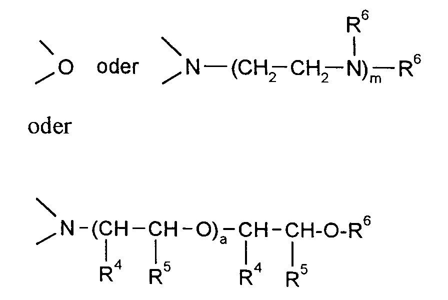 steht, wobei
m eine Zahl von 0 bis 2 ist und
a, R⁴ , R⁶ die obengenannte Bedeutung haben,
X für C₂- bis C₁₀-Alkylen, C₅ bis C₁₀-Cycloalkylen, einen Rest der Formel 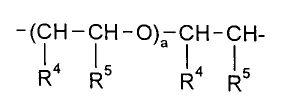 wobei R⁴, R⁵ und a die obengenannte Bedeutung haben, oder einen Rest der Formel 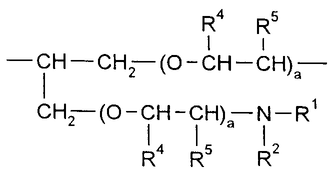 in der a, R⁴, R⁵, R¹ und R² die obengenannte Bedeutung haben, oder
A 2) der Formel 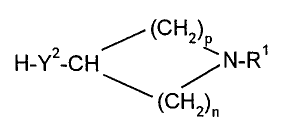 worin
Y² für -O-, -NH-oder NR³ steht, wobei R³ die obengenannte Bedeutung hat, und p unabhängig voneinander die Werte von 1 oder 2 annehmen kann und R¹ die obengenannte Bedeutung hat
oder
A 3) der Formel 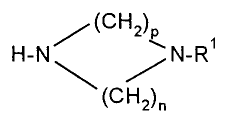 wobei n, p und R¹ die obengenannte Bedeutung haben
oder
A4) der Formel 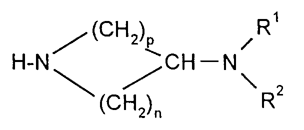 worin n, p, R¹ und R² die obengenannte Bedeutung haben,
oder
B) Aminen, die mehr als eine gegenüber Isocyanaten reaktive Gruppe und gegenfalls Ether-, und/oder Ester- und/oder Amidgruppen enthalten und ein Molgewicht unter 10000 g/mol aufweisen
oder
C) den durch Umsetzung von A) oder B)durch Protonierung und/oder Quaternierung erhaltenen Ammoniumgruppen enthaltenden, gegenüber Isocyanten reaktiven Verbindungen
oder
beliebige Gemischen aus A) bis C) hergestellt worden sind.
